Europäisches Patentamt

European Patent Office

Office européen des brevets

(19)

(11) Veröffentlichungsnummer : **0 089 465**
**B1**

## (12) EUROPÄISCHE PATENTSCHRIFT

(45) Veröffentlichungstag der Patentschrift :
17.07.85

(21) Anmeldenummer : 83100712.5

(22) Anmeldetag : 26.01.83

(51) Int. Cl.⁴ : **C 02 F   3/20**

(54) **Tauchbelüfter.**

(30) Priorität : 22.03.82 DE 3210473

(43) Veröffentlichungstag der Anmeldung :
28.09.83 Patentblatt 83/39

(45) Bekanntmachung des Hinweises auf die Patenterteilung : 17.07.85 Patentblatt 85/29

(84) Benannte Vertragsstaaten :
AT DE FR GB IT NL SE

(56) Entgegenhaltungen :
EP-A- 0 047 921
DE-A- 1 557 146
DE-A- 2 505 772

(73) Patentinhaber : BLUM, Albert
Scheiderhöhe
D-5204 Lohmar 1 (DE)

(72) Erfinder : Arnswald, Werner, Dipl.-Ing.
Lindenweg 12
D-5204 Lohmar-Heppenberg (DE)

(74) Vertreter : Patentanwälte Dipl.-Ing. W. Dahlke
Dipl.-Ing. H.-J. Lippert
Frankenforster Strasse 137
D-5060 Bergisch Gladbach 3 (DE)

EP 0 089 465 B1

**Beschreibung**

Die Erfindung betrifft einen Tauchbelüfter zum Belüften größerer Wassermengen, insbesondere von Schmutzwasser, Abwasser oder dergleichen, bestehend aus einem Belüftergehäuse, einem Wasseransaugstutzen, einer Pumpe zur Erzeugung von einer Mehrzahl von Wasserstrahlen, einer oder mehrerer Mischkammern, durch die die Wasserstrahle hindurchgehen und in denen den Wasserstrahlen Luft zugemischt wird, sowie aus dem Belüftergehäuse hinausführenden Ejektoren, mit denen das mit Luftblasen angereicherte Wasser in verschiedene Ausstoßzonen, in denen die Luftblasen aufsteigen, gestrahlt wird.

Bei Belüftern der genannten Art wird angestrebt, mit einer möglichst geringen Betriebsleistung des Aggregats einen möglichst großen Sauerstoffeintrag in das zu belüftende Wasser zu erzielen. Das wird bei den bekannten Tauchbelüftern dadurch erreicht, daß die Leistungen von Gebläse und Pumpe optimiert und genau aufeinander abgestimmt werden. Größere Leistungssteigerungen sind jedoch damit nicht zu erreichen.

Der Erfindung liegt die Aufgabe zugrunde, bei einem gattungsgemäßen Tauchbelüfter die Belüftungsleistung ohne Erhöhung der Gebläse- und Pumpenleistung erheblich zu steigern.

Erfindungsgemäß wird diese Aufgabe dadurch gelöst, daß die Ejektoren so angeordnet sind, daß der Abstand zwischen den den einzelnen Ejektoren zugeordneten Ausstoßzonen groß ist und somit eine Koaleszenz von Luftblasen benachbarter Ausstoßzonen weitgehend vermieden wird.

Die Vergrößerung des Abstandes zwischen den Ausstoßzonen ist mit relativ geringem vorrichtungstechnischem Aufwand zu erzielen und erbringt bei gleicher Betriebsleistung des Aggregats eine Erhöhung des Sauerstoffeintrags in das zu belüftende Wasser um 20 bis 30 %. Die vorteilhafte Wirkung der Erfindung erklärt sich dadurch, daß durch das Auseinanderziehen der Ausstoßzonen die Blasenkoaleszenz reduziert wird, so daß sich die aus einer Ausstoßzone aufsteigenden Luftblasen nicht mit denen der benachbarten Ausstoßzonen vereinigen können. Die Blasen können somit insgesamt kleiner gehalten werden, so daß ihre wirksame Oberfläche größer als bei den bekannten Tauchbelüftern bleibt. Die äußere Grenze jeder Ausstoßzone liegt dort, wo das senkrechte Aufsteigen von Blasen endet. Die benachbarte Ausstoßzone darf dann nicht ganz bis an diese Grenze heranreichen.

Die Vergrößerung des Abstandes zwischen den Ausstoßzonen kann auf verschiedene Weise erfolgen, und zwar in Abhängigkeit von der jeweiligen Bauart des Belüfters.

Vorzugsweise werden die Austrittsquerschnitte benachbarter Ejektoren weit voneinander entfernt angeordnet. Dies kann beispielsweise dadurch erreicht werden, daß die Ejektoren in welchselnder Folge unterschiedlich lang ausgebildet sind.

Gute Erfolge wurden bereits erzielt, wenn die Länge der Ejektoren nach der Folge lang, mittel, kurz, mittel, lang, mittel usw. gewählt wird. Die Länge der mittleren Ejektoren kann dabei etwa dem arithmetischen Mittel zwischen den langen und den kurzen Ejektoren entsprechen.

Alternativ kann die Länge der Ejektoren auch nach der Folge lang, kurz, lang, kurz usw. gewählt werden.

Ferner können auch die Abstände zwischen benachbarten Ejektoren groß sein. Auch dies führt zu dem angestrebten Erfolg.

Bei kleineren Einheiten mit nur wenigen Ejektoren können die benachbarten Ejektoren in einem Winkel derart zueinander angeordnet sein, daß die Abstände zwischen den Ejektorachsen in Strömungsrichtung größer werden.

Schließlich können auch die Austrittsgeschwindigkeiten benachbarter Ejektoren unterschiedlich einstellbar sein. Die Einstellung der Austrittsgeschwindigkeit kann durch entsprechende Formgebung der Ejektoren problemlos erfolgen.

In Abhängigkeit von der jeweiligen Bauart des Tauchbelüfters sind auch noch weitere Maßnahmen möglich, mit denen man durch Einwirkung auf die Blasenkoaleszenz den Sauerstoffeintrag in das Wasser erhöhen kann.

Die Erfindung ist in der Zeichnung beispielsweise veranschaulicht und im nachstehenden im einzelnen anhand der Zeichnung beschrieben. Es zeigen :

Figur 1   eine Seitenansicht eines auf dem Boden eines Wasserbeckens aufstehenden Tauchbelüfters mit einer Mehrzahl von Ejektoren rund um das Belüftergehäuse,

Figur 2   einen Schnitt entlang der Linie II-II aus Fig. 1,

Figur 3   eine Seitenansicht einer kleineren Belüftereinheit mit zwei Ejektoren und

Figur 4   eine Draufsicht auf die Belüftereinheit gemäß Fig. 3.

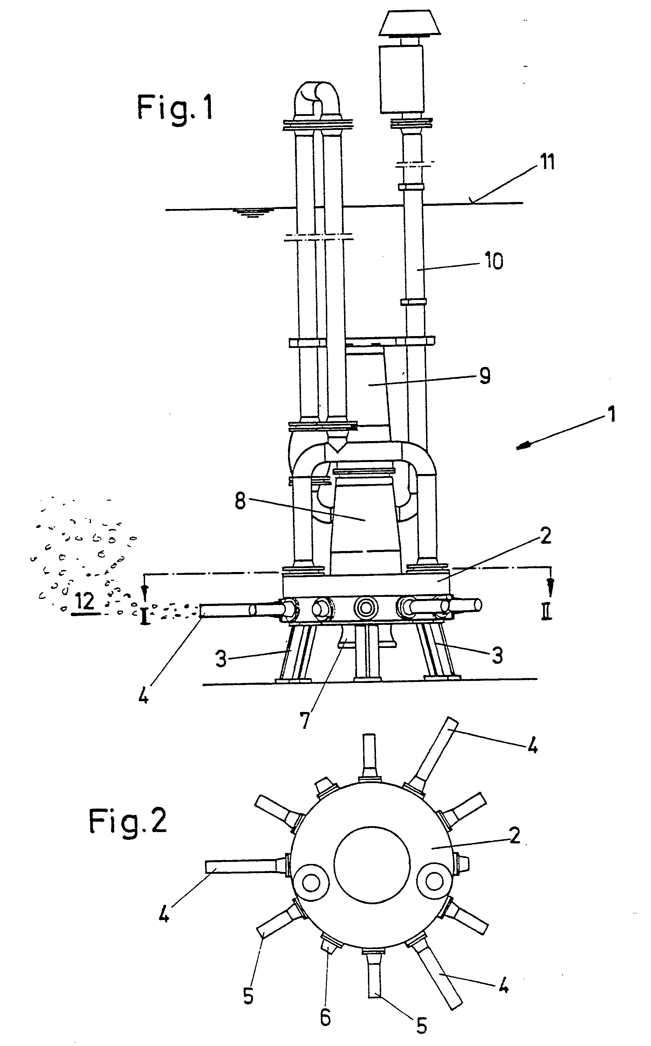

In Fig. 1 und 2 der Zeichnung ist ein Tauchbelüfter 1 dargestellt, wie er für die Abwasserreinigung und Wasseraufbereitung Verwendung findet.

Der Tauchbelüfter besteht im wesentlichen aus einem Belüftergehäuse 2, das mit Hilfe von drei Standbeinen 3 auf dem Boden eines Wasserbeckens abgestellt wird. Das Gehäuse 2 ist rund ausgebildet und weist eine Mehrzahl von radial angeordneten Ejektoren 4, 5 und 6 auf, die in gleichen Abständen rund um den Umfang des Gehäuses 2 angeordnet sind.

An seiner Unterseite ist das Gehäuse 2 mit einem Wasseransaugstutzen 7 versehen, durch welches das Wasser mittels einer Pumpe 8 angesaugt wird. Die Pumpe erzeugt aus dem angesaugten Wasser eine Mehrzahl von Wasserstrahlen die der Anzahl der Ejektoren entsprechen, wobei die Wasserstrahle durch in der Zeichnung nicht dargestellte Mischkammern hindurchgehen, in denen den Wasserstrahlen Luft zugemischt wird. Das Zumischen der Luft erfolgt mit Hilfe eines Gebläses 9, welches über eine Saugleitung 10 Luft aus einem Bereich oberhalb des Wasserspiegels 11 ansaugt und in die Mischkammern drückt. In den Mischkammern dringt die angesaugte Luft feinblasig in die Wasserstrahle ein und wird mit den Wasserstrahlen durch die Ejektoren in das zu belüftende Wasser gestrahlt.

An dem Gehäuse sind zwölf Ejektoren angeordnet, denen je eine Ausstoßzone 12 zugeordnet ist, aus der das horizontal ausgestrahlte Wasser-Luft-Gemisch nach oben steigt. Um die einzelnen Ausstoßzonen 12 voneinander zu trennen, weisen die Ejektoren unterschiedliche Längen auf, und zwar nach der Folge lang 4, mittel 5, kurz 6, mittel 5, lang 4, mittel 5 usw. Die mittellangen Ejektoren 5 sind etwa so lang gewählt, daß sie das arithmetische Mittel zwischen den langen Ejektoren 4 und den kurzen Ejektoren 6 bilden.

Bei zwölf über den Umfang verteilt angeordneten Ejektoren sind also drei lange Ejektoren 4, drei kurze Ejektoren 6 und sechs mittellange Ejektoren 5 vorgesehen.

Bei einem anderen Ausführungsbeispiel, bei dem sechzehn Ejektoren vorgesehen sind, sind entsprechend vier Ejektoren lang, vier Ejektoren kurz und acht Ejektoren mittellang ausgebildet.

Aufgrund der unterschiedlichen Länge der Ejektoren werden die jeweiligen Ausstoßzonen 12 besser voneinander getrennt, so daß zwischen den aufsteigenden Blasen benachbarter Ausstoßzonen 12 keine bzw. nur eine geringfügige Koaleszenz auftritt. Dadurch kann eine relativ gute Feinblasigkeit aufrechterhalten werden, die für einen sehr guten Wirkungsgrad der Anlage sorgt.

Bei Tauchbelüftern, bei denen die Ejektoren beispielsweise parallel nebeneinander angeordnet sind, kann das gleiche Schema mit den unterschiedlichen Ejektorlängen angewandt werden.

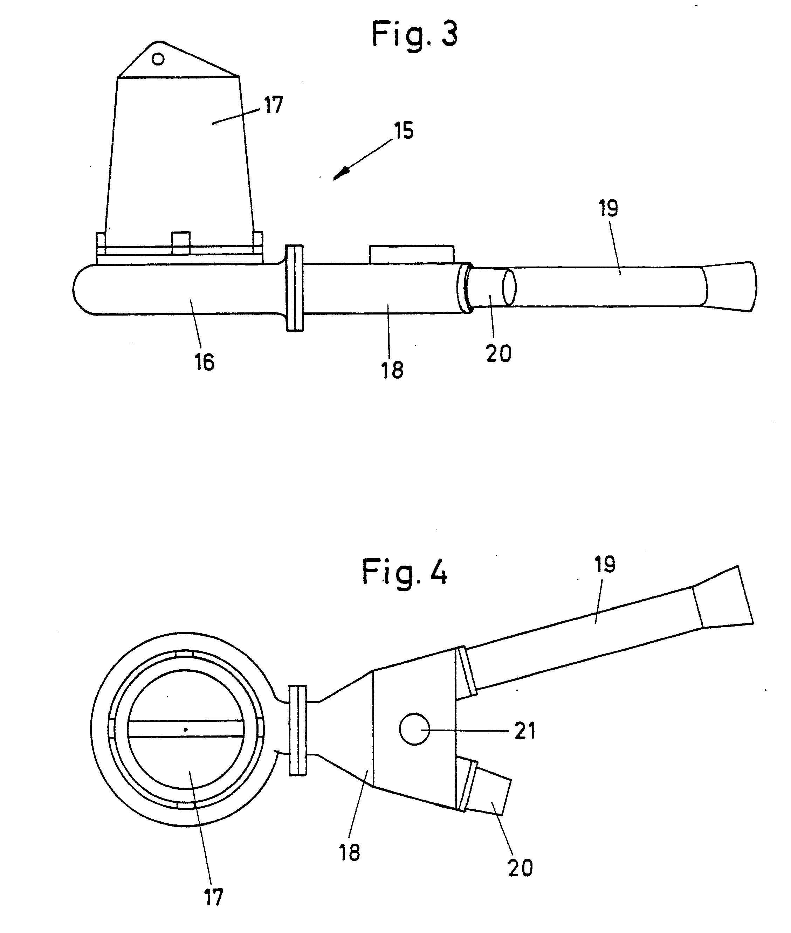

In Fig. 3 und 4 ist eine relativ kleine Belüftereinheit 15 dargestellt, die aus einer Pumpe 16 mit einem Antriebsmotor 17 und einer nachgeschalteten Mischkammer 18 besteht, in der zwei Wasserstrahle erzeugt und über zwei Ejektoren 19 und 20 ausgestoßen werden. An die Oberseite der Mischkammer 18 kann eine in der Zeichnung nicht dargestellte Druckluftleitung angeschlossen werden, die durch eine zentrale Öffnung 21 Druckluft in die Mischkammer 18 einträgt, in der die Luft den beiden erzeugten Wasserstrahlen feinblasig beigemischt wird.

Die beiden mit Luftblasen angereicherten Wasserstrahle gelangen dann durch die Ejektoren 19 und 20 in das zu belüftende Wasser. Um die Ausstoßzonen hinter den Ejektoren voneinander zu trennen, sind die Ejektoren in einem Winkel zueinander angeordnet, wobei die Abstände zwischen den Ejektorachsen in Strömungsrichtung größer werden. Ferner ist der Ejektor 19 relativ lang ausgebildet, während der Ejektor 20 nur sehr kurz ist.

Auch mit einem solchen Tauchbelüfter lassen sich sehr gute Belüftungsergebnisse erzielen.

## Patentansprüche

1. Tauchbelüfter zum Belüften größerer Wassermengen, insbesondere von Schmutzwasser, Abwasser oder dergleichen, bestehend aus einem Belüftergehäuse, einem Wasseransaugstutzen, einer Pumpe zur Erzeugung von einer Mehrzahl von Wasserstrahlen, einer oder mehrerer Mischkammern, durch die die Wasserstrahle hindurchgehen und in denen den Wasserstrahlen Luft zugemischt wird, sowie aus dem Belüftergehäuse herausführenden Ejektoren, mit denen das mit Luftblasen angereicherte Wasser in verschiedene Ausstoßzonen, in denen die Luftblasen aufsteigen, gestrahlt wird, dadurch gekennzeichnet, daß die Ejektoren (4, 5, 6 ; 19, 20) so angeordnet sind, daß der Abstand zwischen den den einzelnen Ejektoren zugeordneten Ausstoßzonen (12) groß ist und somit eine Koaleszenz von Luftblasen benachbarter Ausstoßzonen (12) weitgehend vermieden wird.

2. Tauchbelüfter nach Anspruch 1, dadurch gekennzeichnet, daß die Austrittsquerschnitte benachbarter Ejektoren (4, 5, 6 ; 19, 20) weit voneinander entfernt angeordnet sind.

3. Tauchbelüfter nach Anspruch 2, dadurch gekennzeichnet, daß die Ejektoren (4, 5, 6 ; 19, 20) in wechselnder Folge unterschiedlich lang ausgebildet sind.

4. Tauchbelüfter nach Anspruch 3, dadurch gekennzeichnet, daß die Länge der Ejektoren (4, 5, 6) nach der Folge lang, mittel, kurz, mittel, lang, mittel usw. gewählt ist.

5. Tauchbelüfter nach Anspruch 4, dadurch gekennzeichnet, daß die Länge der mittellangen Ejektoren (5) etwa das arithmetische Mittel zwischen den langen (4) und den kurzen Ejektoren (6) ist.

6. Tauchbelüfter nach Anspruch 3, dadurch gekennzeichnet, daß die Länge der Ejektoren nach der Folge lang, kurz, lang, kurz usw. gewählt ist.

7. Tauchbelüfter nach Anspruch 2, dadurch gekennzeichnet, daß die Abstände zwischen benachbarten Ejektoren groß sind.

8. Tauchbelüfter nach Anspruch 2, dadurch gekennzeichnet, daß benachbarte Ejektoren (19, 20) in einem Winkel zueinander stehen, wobei die Abstände zwischen den Ejektorachsen in Strömungsrichtung größer werden.

9. Tauchbelüfter nach Anspruch 1, dadurch gekennzeichnet, daß die Austrittsgeschwindigkeiten aus benachbarten Ejektoren unterschiedlich einstellbar sind.

## Claims

1. Immersion aerator for aerating relatively large quantities of water, particularly waste water, sewage, etc., consisting of an aerator housing, a water intake pipe connection, a pump to generate a plurality of water jets, one or more mixing chambers through which the water jets pass and in which air is admixed with the water jets, and ejectors leading out of the aerator housing, by which the water enriched with air bubbles is projected into different discharge zones, characterized in that said ejectors (4, 5, 6 ; 19, 20) are arranged that way that the distance between the discharge zones (12) which are attached to each of the ejectors is large, thereby avoiding extensively a coalescence of air bubbles of adjacent discharge zones (12).

2. Immersion aerator according to Claim 1, characterized in that the exit cross-sections of adjacent ejectors (4, 5, 6 ; 19, 20) are arranged at a greater mutual distance.

3. Immersion aerator according to Claim 2, characterized in that the ejectors (4, 5, 6 ; 19, 20) are constructed of different lengths in alternating sequence.

4. Immersion aerator according to Claim 3, characterized in that the length of the ejectors (4, 5, 6) is chosen in the sequence long, medium, short, medium, long, medium, etc.

5. Immersion aerator according to Claim 4, characterized in that the length of the medium-length ejectors (5) is approximately the arithmetic mean between the long (4) and the short ejectors (6).

6. Immersion aerator according to Claim 3, characterized in that the length of the ejectors is chosen in the sequence long, short, long, short, etc.

7. Immersion aerator according to Claim 2, characterized in that the intervals between adjacent ejectors are increased.

8. Immersion aerator according to Claim 2, characterized in that adjacent ejectors (19, 20) are placed mutuallly at an angle, whilst the intervals between the ejector axes increase in the flow direction.

9. Immersion aerator according to Claim 1, characterized in that the exit velocities from adjacent ejectors are chosen different.

**Revendications**

1. Aérateur immergé pour l'aération de grandes quantités d'eau, en particulier d'eaux boueuses, d'eaux d'égout ou similaires, se composant d'une enveloppe d'aérateur, d'une tubulure d'aspiration d'eau, d'une pompe pour la formation d'une multiplicité de jets d'eau, d'une ou de plusieurs chambres de mélange à travers lesquelles passent les jets d'eau et dans lesquelles de l'air est mélangé aux jets d'eau, ainsi que d'éjecteurs qui sortent de l'enveloppe d'aérateur et par lesquels l'eau enrichie de bulles d'air est projetée dans différentes zones d'éjection, dans lesquelles les bulles d'air remontent, caractérisé en ce que les éjecteurs (4, 5, 6 ; 19, 20) sont disposés de telle manière que la distance entre les zones d'éjection (12) associées aux différents éjecteurs soit grande et qu'ainsi, une coalescence de bulles d'air de zones d'éjection (12) voisines soit évitée dans une large mesure.

2. Aérateur immergé selon la revendication 1, caractérisé en ce que les sections de sortie d'éjecteurs voisins (4, 5, 6 ; 19, 20) sont disposées de manière à être largement éloignées les unes des autres.

3. Aérateur immergé selon la revendication 2, caractérisé en ce que les éjecteurs (4, 5, 6 ; 19, 20) sont réalisés de manière à présenter alternativement des longueurs différentes.

4. Aérateur immergé selon la revendication 3, caractérisé en ce que la longueur des éjecteurs (4, 5, 6) est choisie successivement longue, moyenne, courte, moyenne, longue, moyenne, etc.

5. Aérateur immergé selon la revendication 4, caractérisé en ce que la longueur des éjecteurs de longueur moyenne (5) est à peu près la moyenne arithmétique entre celles des éjecteurs longs (4) et des éjecteurs courts (6).

6. Aérateur immergé selon la revendication 3, caractérisé en ce que la longueur des éjecteurs est choisie successivement longue, courte, longue, courte, etc.

7. Aérateur immergé selon la revendication 2, caractérisé en ce que les distances entre éjecteurs voisins sont grandes.

8. Aérateur immergé selon la revendication 2, caractérisé en ce que des éjecteurs voisins (19, 20) forment un angle entre eux, les distances entre les axes des éjecteurs croissant dans le sens de l'écoulement.

9. Aérateur immergé selon la revendication 1, caractérisé en ce que les vitesses de sortie d'éjecteurs voisins sont réglables différemment.

# 0 089 465

Fig. 1

Fig. 2

# Fig. 3

# Fig. 4